# EUROPÄISCHE PATENTSCHRIFT

(11) **EP 1 159 831 B1**
(45) Veröffentlichungstag und Bekanntmachung des Hinweises auf die Patenterteilung: **11.07.2007**
(21) Anmeldenummer: 00907649.8
(22) Anmeldetag: 29.02.2000
(51) Int. Cl.: H04Q 1/14, H01R 13/73, H01R 9/26, H02B 1/052

(54) **VORRICHTUNG ZUR HALTERUNG VON ANSCHLUSSLEISTEN DER TELEKOMMUNIKATIONS-, STEUERUNGS-, ENERGIE- UND DATENTECHNIK**
FIXING DEVICE FOR CONNECTOR STRIPS USED IN TELECOMMUNICATIONS, CONTROL ENGINEERING, POWER ENGINEERING AND DATA SYSTEMS
DISPOSITIF DE FIXATION D'ELEMENTS DE RACCORDEMENT UTILISES DANS LE DOMAINE DES TELECOMMUNICATIONS, DE LA COMMANDE, DE L'ENERGETIQUE ET DE L'INFORMATIQUE

(30) Priorität: 17.03.1999 DE 19913097
(43) Veröffentlichungstag der Anmeldung: 05.12.2001
(73) Patentinhaber: ADC GMBH, 14167 Berlin (DE)
(72) Erfinder: HINKEL, Hubert, D-01662 Meissen (DE); TAYBL, Christa, D-14197 Berlin (DE); ZÜHLKE, Ines, D-01561 Liega (DE)
(86) Internationale Anmeldenummer: PCT/EP2000/001685
(87) Internationale Veröffentlichungsnummer: WO 2000/056078

(56) Entgegenhaltungen:
- EP-A- 0 304 393

## Beschreibung

Die Erfindung bezieht sich auf einen Universalclip gemäß dem Oberbegriff des Patentanspruches 1.

Ein Universalclip der gattungsgemäßen Art ist aus der EP-A-0 304 393 vorbekannt und dient zur Herstellung eines Abstandes von runden Montagestangen von einem Gestellteil, wozu die Montagestangen in Paare oberseitig angebrachter Klemmlaschen eingerastet werden. Zwar kann der Universalclip auf verschiedene Gestellteile, wie z.B. Tragschienen, aufgerastet werden, jedoch ist der Universalclip nicht geeignet, entweder runde Montagestangen oder gerade Montageschienen aufzunehmen.

Ein weiterer Universalclip ist aus der DE 37 28 368 C1 vorbekannt. Hierbei werden die Anschlußleisten mittels angeformter Schnappelemente auf parallel zueinander angeordnete Montagestangen aufgerastet, die an verschiedenen Trägerelementen mittels unterschiedlicher Verbindungselemente festgelegt sind. Nachteilig ist der große bautechnische Aufwand für die verschiedenen Träger- und Befestigungselemente.

Aus DE 23 15 485 A1 ist es vorbekannt, Anschlußleisten auf Montageschienen aufzurasten, welche die Seitenwände von U-förmigen Montagewannen bilden. Nachteilig ist der große bautechnische Aufwand für die Herstellung der Montagewannen, wenn Anschlußleisten unterschiedlicher Längen aufgerastet werden müssen, wozu Montagewannen unterschiedlicher Weite vorrätig gehalten werden müssen.

Der Erfindung liegt die Aufgabe zugrunde, einen Universalclip der gattungsgemäßen Art zu schaffen, der bautechnisch einfach herstellbar, variabel zur Aufnahme unterschiedlicher Bauelemente verwendbar und leicht montierbar ist.

Die Lösung dieser Aufgabe ergibt sich aus den kennzeichnenden Merkmalen des Patentanspruches 1. Erfindungsgemäß wird als Universalclip zur Halterung von Anschlußleisten ein Universalclip aus Kunststoff verwendet, der mit einer Öffnung zur Aufnahme einer Montagestange, mindestens einem die Öffnung seitlich der Achse durchdringenden Schlitz zur Aufnahme einer Montageschiene und mit Befestigungselementen zur Halterung an Trägerelementen versehen ist. Die Universalclips werden regelmäßig paarweise eingesetzt, so daß zwei Paare von Universalclips zwei parallele Montagestangen oder -schienen in ihren Öffnungen bzw. diese durchdringenden Schlitzen aufnehmen. Dabei dienen die parallelen Montagestangen und/oder -schienen der Halterung der Anschlußleisten, die auf diese in bekannter Weise aufgerastet sind, wie es aus DE 23 15 485 A1 und DE 37 28 368 CI vorbekannt ist.

In weiterer Ausbildung der Erfindung sind zwei parallele und im Abstand zueinander angeordnete Schlitze vorgesehen, um die Montageschienen zur Aufnahme unterschiedlich langer Anschlußleisten in unterschiedlichen Abständen voneinander anordnen zu können. Als Befestigungselemente zur Halterung des Universalclips an Trägerelementen dienen entweder zwei federnde Rasthaken, die unterhalb des Basiskörpers angeordnet sind, oder zwei starre Anschraubflansche, die auf den gegenüberliegenden Stirnseiten des Basiskörpers des Universalclips angeordnet sind. Die Trägerelemente sind mit zwei im Abstand der Länge der Montagestangen oder -schienen angeordneten, parallelen Reihen von Öffnungen in Form von Schlitzen, auch in Kreuzform,versehen.

Schließlich ist in weiterer Ausbildung der Erfindung am die Öffnung zur Aufnahme einer Montagestange umschließenden Grundkörper ein U-förmiges Aufnahmeteil für DIN-Anschlußleisten angeordnet, das auf der Innenseite der Rückwand mit einem halbrunden Steg versehen ist. Auf der Außenseite der Rückwand des U-förmigen Aufnahmeteils und innerhalb der Außenwand des halbrunden Steges ist ein Einschubschlitz für eine Montageschiene ausgebildet.

Die Erfindung ist nachfolgend anhand eines in den Zeichnungen näher dargestellten Universalclips und anhand mehrerer Anwendungsbeispiele näher erläutert. Es zeigen:
- Fig. 1: eine perspektivische Ansicht der Vorderseite des Universalclips,
- Fig. 2: eine perspektivische Ansicht der Rückseite des Universalclips,
- Fig. 3: eine perspektivische Ansicht der Anordnung von vier, zwei Montagestangen und eine Anschlußleiste haltenden Universalclips,
- Fig. 4: eine Draufsicht auf eine Trägerplatte und mehrere darauf mittels Universalclips befestigter Montagestangen,
- Fig. 5: eine perspektivische Ansicht der Anordnung von vier,zwei Montageschienen und eine kurze Anschlußleiste tragenden Universalclips,
- Fig. 6: eine perspektivische Ansicht der Anordnung von vier,zwei Montageschienen und eine lange Anschlußleiste tragenden Universalclips,
- Fig. 7: eine perspektivische Ansicht entsprechend Fig. 5 oder 6 mit anderen Montageschienen,
- Fig. 8: eine Draufsicht auf eine Anordnung nach Fig. 7 auf ein Trägerelement und
- Fig. 9: zwei eine DIN-Anschlußleiste tragende Universalclips in perspektivischer Darstellung.

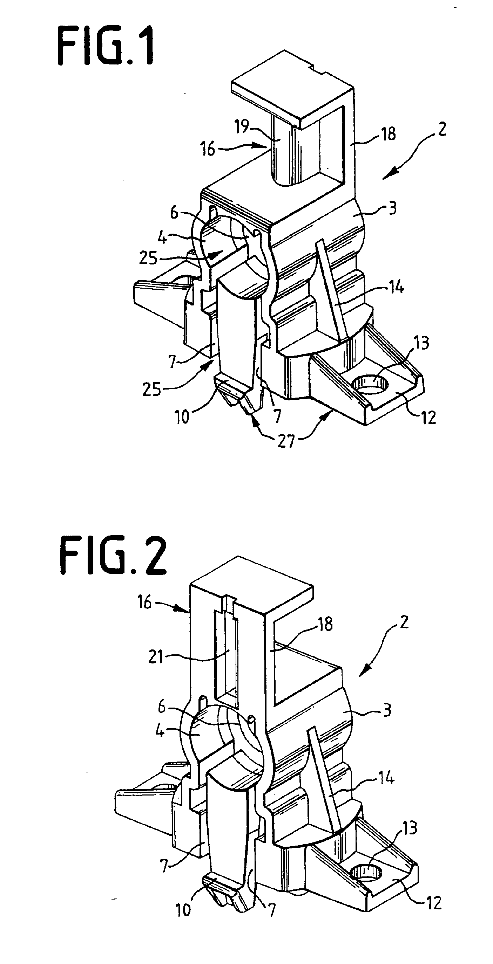

Die Vorrichtung zur Halterung von Anschlußleisten 1 der Telekommunikations-, Steuerungs-, Energie- und Datentechnik besteht aus einem Universalclip 2 aus Kunststoff, der in den Figuren 1 und 2 in Vorder- bzw. Rückansicht dargestellt ist. Der Grundkörper 3 des Universalclips 2 umschließt von Vorder- und Rückseite eingebrachte Öffnungen 4 als Aufnahmeelemente 25 für Bauelemente 26 in Form einer Montagestange 5, wobei die Öffnungen 4 im Längsmittelbereich des Grundkörpers 3 durch eine stegartig umlaufende Trennwand 6 voneinander beabstandet sind. Auf Vorder- und Rückseite des Grundkörpers 3 sind die Öffnungen 4 von Schlitzen 7 durchdrungen, die parallel und im Abstand zueinander beidseits der Längsachse der Öffnungen 4 angeordnet sind und die als Aufnahmeelemente 25 von Bauelementen 26 in Form von Montageschienen 8 dienen. Der zwischen den parallelen Schlitzen 7 verbleibende Teil des Grundkörpers 3,der über die stegartige zentrale Trennwand 6 mit dem Grundkörper 3 verbunden ist, bildet auf Vorder-und Rückseite des Universalclips 2 zwei Rasthaken 10, die unterhalb des Basiskörpers 9 des Universalclips 2 hinausragend, federnd, winklig und entrastbar ausgebildetet sind und die als Befestigungselemente 27 zur Halterung des Universalclips 2 an Trägerelementen 11 dienen. Der Basiskörper 9 umfaßt an seinen gegenüberliegenden Stirnseiten senkrecht zur durch die Öffnungen 4 verlaufenden Achse des Universalclips 2 in der Ebene des Basiskörpers 9 sich erstreckende starre Anschraubflansche 12 mit Schrauböffnungen 13 für Schraubelemente. In der Längsmittelebene der zentralen, inneren stegartigen Trennwand 6 auf der Außenseite des Grundkörpers 3 angebrachte Außenstege 14 versteifen den Universalclip 2 und bilden eine Absteifung zwischen dem Basiskörper 9 und dem die Öffnungen 4 umschließenden Grundkörper 3.

Radial zum Umfangsbereich des die Öffnungen 4 umschließenden Grundkörpers 3 erstreckt sich ein U-förmiges Aufnahmeteil 16 für DIN-Anschlußleisten 17, das auf der Innenseite der Rückwand 18 mit einem halbrunden Steg 19 versehen ist, der zur Verrastung der DIN-Anschlußleiste 17 dient. Auf der Außenseite der Rückwand 18 des U-förmigen Aufnahmeteils 16 und innerhalb des halbrunden Steges 19 ist ein Einschubschlitz 21 für eine Montageschiene 8 ausgebildet.

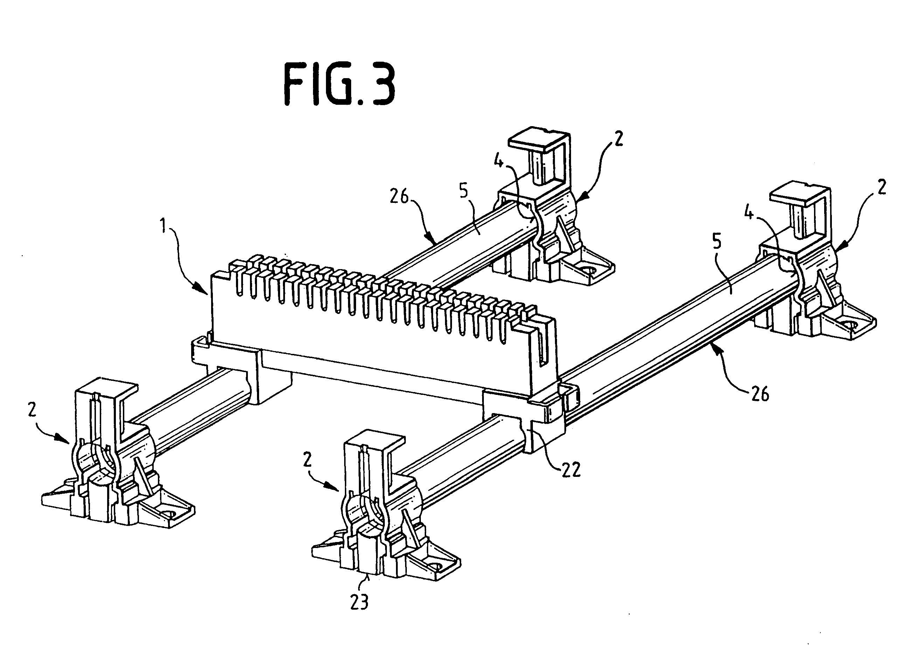

Wie es Fig. 3 zeigt, können zwischen je zwei mit ihren Vorderseiten gegeneinander gerichteten Universalclips 2 runde Montagestangen 5 als Aufnahmeelemente 25 in die gegenüberliegenden Öffnungen 4 der beiden Universalclips 2 eingeschoben werden, wobei auf die so parallel gehaltenen, als Bauelemente 25 zur Halterung dienenden runden Montagestangen 5 die Anschlußleisten 1 mit ihren bodenseitigen Schnappelementen 22 aufgerastet sind.

Es kann auch eine Hintereinanderanordnung mehrerer Montagestangen 5 erfolgen, indem in die in Fig. 3 frei dargestellten Öffnungen 4 auf den Außenseiten der Universalclips weitere Montagestangen 5 eingeschoben und über endseitige, nicht dargestellte weitere Universalclips 2 festgelegt werden.

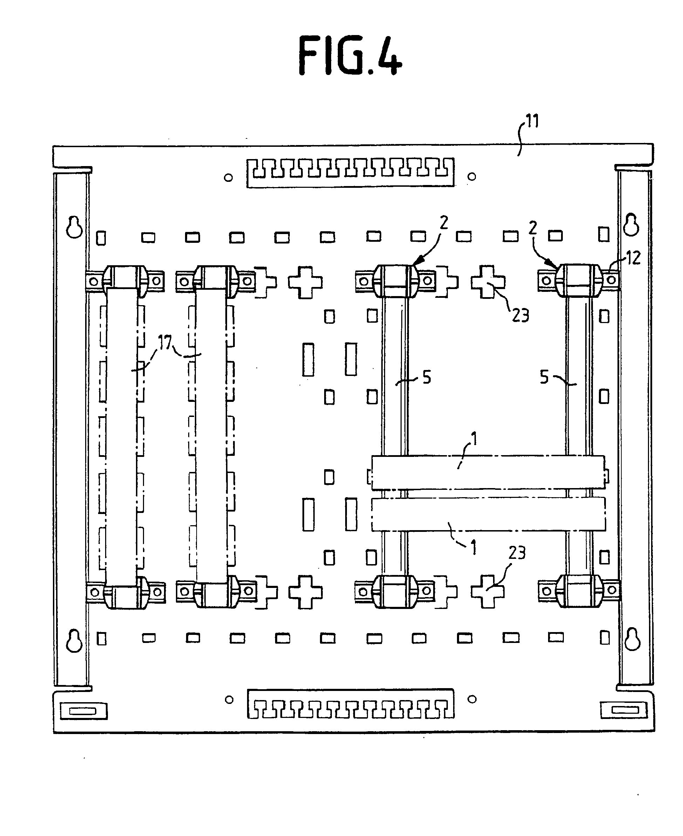

Die in Fig.3 nicht dargestellten Rasthaken 10 der vier Universalclips 2 können entfernt worden oder aber in plattenförmige, metallische Trägerelemente 11 eingerastet sein, wie in Fig.4 dargestellt. Hierzu weisen die Trägerelemente 11 schlitz-bzw. kreuzschlitzartige Öffnungen 23 auf, die in zwei parallelen, voneinander beabstandeten Reihen angeordnet sind und in welche die Rasthaken 10 eingreifen. Alternativ können die starren Anschraubflansche 12 mittels die Öffnungen 23 durchdringender Schraubelemente mit dem Trägerelement 11 festgelegt werdem. Der Mittenabstand der parallelen Montagestangen 5 entspricht dabei genau dem Rastermaß der Anschlußleisten 1.

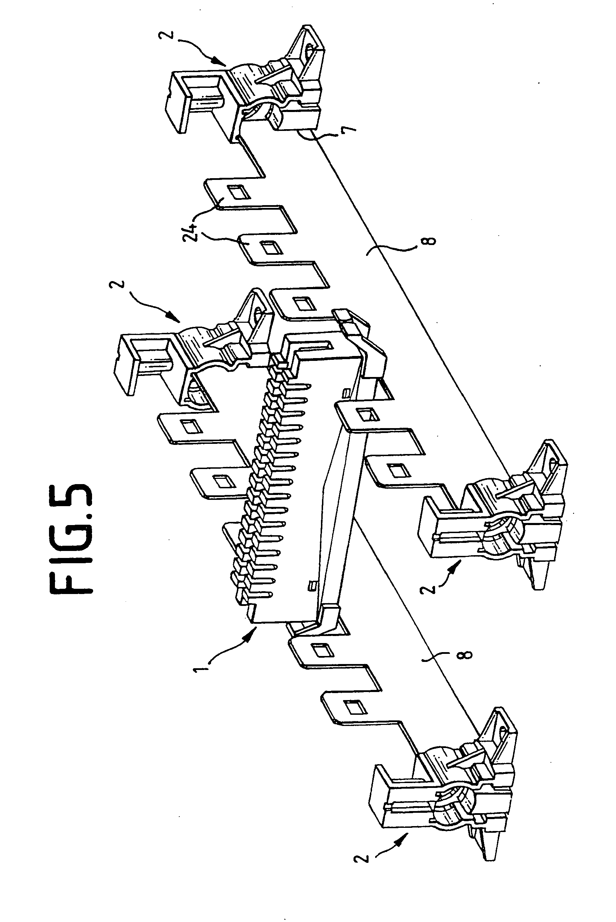

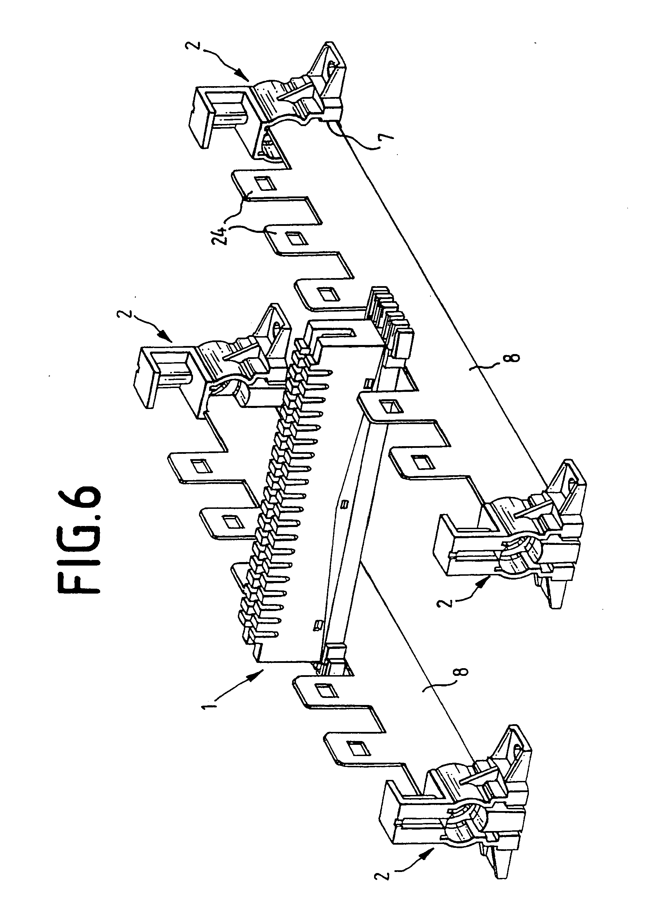

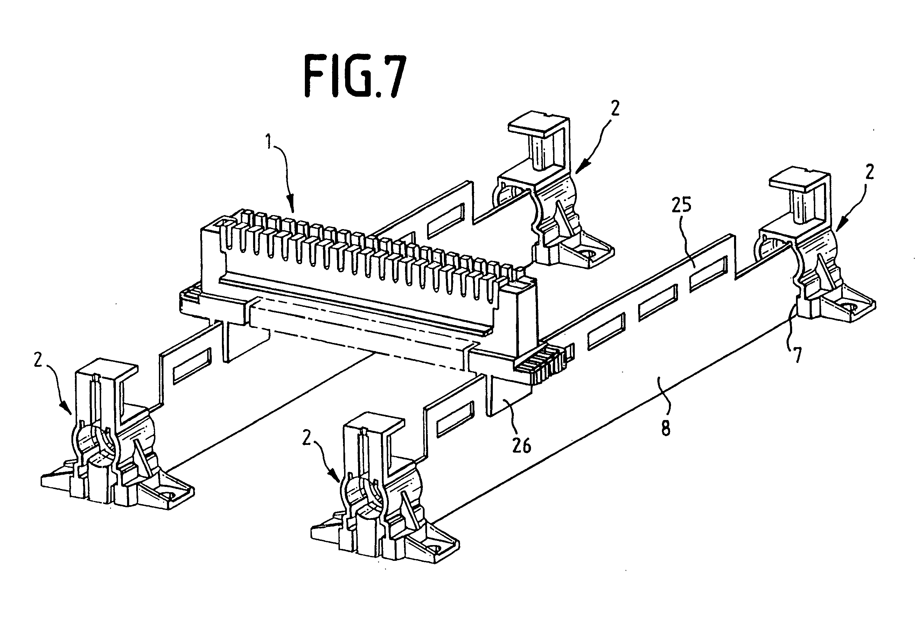

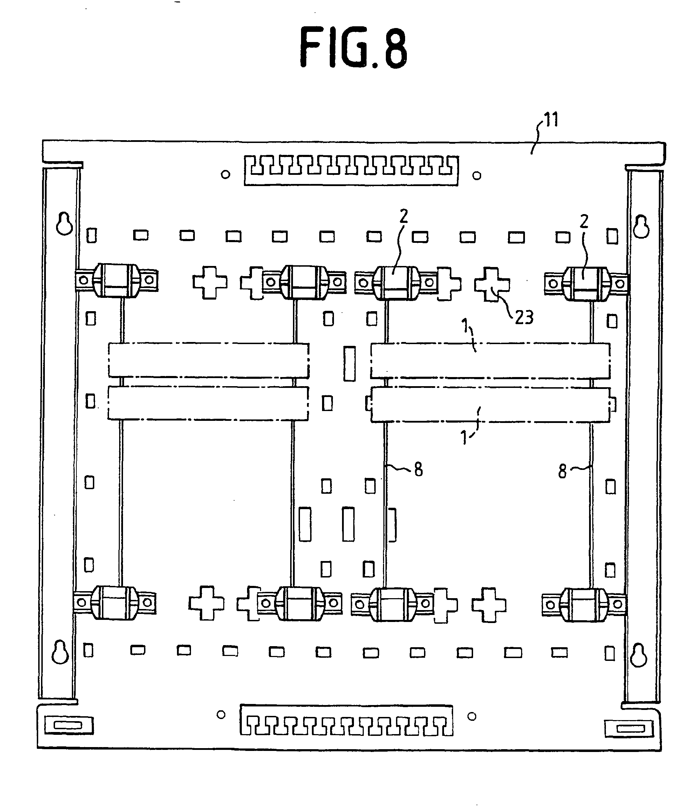

Wie es in Fig. 5 dargestellt ist,können in die jeweils innenliegenden Schlitze 7 zweier mit ihren Vorderseiten gegenüber und parallel zueinander angeordneter Universalclips 2 Montageschienen 8 eingesteckt werden, auf deren Laschen 24 die Anschlußleisten 1 aufgesteckt sind.In der Ausführungsform nach Fig. 5 ist eine kurze Anschlußleiste 1 aufgesteckt. In der Ausführungsform nach Fig. 6 ist eine längere Anschlußleiste 1 aufgesteckt. Hierzu sind die Montageschienen 8 in die jeweils außenliegenden Schlitze 7 der jeweiligen Universalclips 2 eingesteckt. In der Ausführungsform nach Fig. 7 umfassen die Montageschienen 8 anstelle der Laschen 24 durchgehende Raststege 15, auf welche die Anschlußleisten 1 mit schlitzförmigen Rastaufnahmen 20 aufgerastet sind. Die Fig. 8 zeigt die Draufsicht auf die mehrfache Anordnung nach Fig. 7, wobei die die Montageschienen 8 parallel haltenden Universalclips 2 in die schlitz- oder kreuzförmigen Öffnungen 23 der plattenförmigen Trägerelemente 11 mittels der Rasthaken 10 eingerastet oder mittels der Anschraubflansche 12 verschraubt sind. Dabei sind links zwei Montageschienen 8 mit kleinem Abstand für kurze Anschlußleisten 1 und rechts zwei Montageschienen 8 mit großem Abstand für lange Anschlußleisten 1 dargestellt.

In nicht näher dargestellter Weise ragen über die Unterseite des Basiskörpers 9 in der Längsmittelebene des Universalclips 2 zwei im Querschnitt rechteckige Stege rechtwinklig versetzt zu den federnden Rasthaken 10 hinaus. Diese Stege greifen in die schlitz- oder kreuzförmigen Öffnungen 23 der plattenförmigen Trägerelemente 11 ein und dienen als Verdrehschutz für die Universalclips 2.

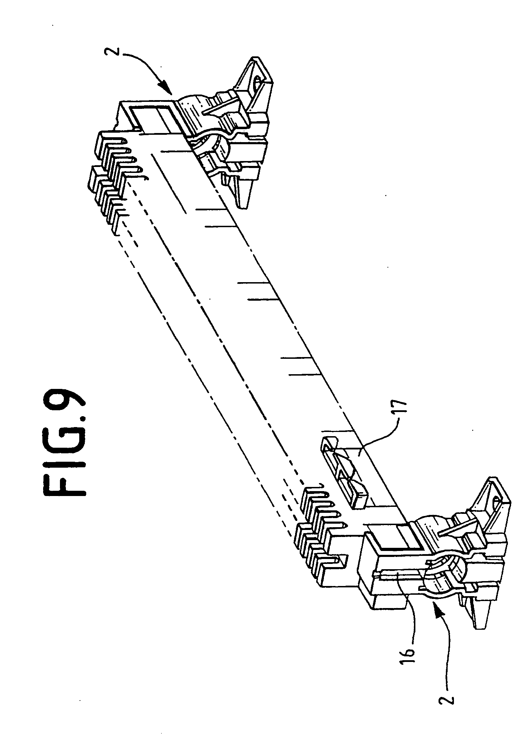

Die Fig.9 zeigt zwei mit ihren Vorderseiten im Abstand voneinander gegenüberstehende Universalclips 2, in deren U-förmigen Aufnahmeteile 16 eine DIN-Anschlußleiste 17 eingesteckt ist, welche eine dem Steg 19 auf der Rückwand 18 des Aufnahmeteils 16 entsprechende Rundung an den Stirnseiten aufweist.

Der Universalclip 2 ist ein variables Befestigungs- bzw. Trägerelement zur Aufnahme verschiedener Montageprofile, wie runden Montagestangen 5 und flachen Montageschienen 8, und wird wahlweise mittels der Rasthaken 10 bzw. Anschraubflansche 12 auf dem plattenförmigen Trägerelement 11 befestigt. Der Einsatz des Universalclips 2 ergibt sich aus seiner Variabilität der Profilgeometrien und der Befestigungsarten für universelle Anwendungen in der Kommunikations-, Steuerungs- und Energie- und Datentechnik bzw. als Halterung verschiedenster mechanischer und elektrischer Einbauten in Gehäusen zur direkten bzw. indirekten Aufnahme der genannten Baukomponenten. Das Grundprinzip des Universalclips 2 besteht darin, daß zwei oder mehrere Universalclips 2 über Rast- oder Schraubbefestigungen in Form der Rasthaken 10 bzw. der Anschraubflansche 12 ein Montageelement verschiedener Profilgeometrie, wie Montagestange 5 oder Montageschiene 8, durch deren Einschieben in den entsprechenden Aufnahmebereich des Universalclips 2 aufnehmen. Der das Kopfelement des Universalclips 2 bildende Grundkörper 3 ist derart gestaltet, daß durch die Verwendung von Universalclips 2 insbesondere DIN-Anschlußleisten 17 bzw. bauteileähnlicher Geometrie zwischen den Vorderseiten der Universalclips 2 gefaßt werden können. Auf den entgegengesetzten Rückseiten der Universalclips 2 befinden sich Einschubschlitze 21, in welche Montageschienen 8, z.B. mit einer Dicke von 1,5 mm, eingeschoben werden können. Der das Mittelteil des Universalclips 2 bildende Grundkörper 3 dient als variable Aufnahme von runden Montagestangen 5 mit einem Durchmesser von z.B. 12 mm zur Aufnahme von Anschlußleisten 1 und Glasfaserkomponenten. Die beidseits der Mittelachse der Öffnungen:4 angebrachten Schlitze 7 erlauben die Aufnahme von Montageschienen 8 mit einer Dicke von z.B. 1 mm insbesondere zur Aufnahme von Anschlußleisten 1. Durch mehrfache Anordnung der Schlitze 7 sind im Zusammenhang mit der variablen Befestigung unterschiedliche Abstandskombinationen der Montageschienen 8 möglich. Der das Fußteil des Universalclips 2 bildende Basiskörper 9 ist so gestaltet, daß der Universalclip 2 mittels der Rasthaken 10 auf eine flache, metallische Trägerplatte 11 aufgerastet werden kann. Durch eine kreuzförmige Gestaltung der Aufnahmeöffnungen 23 wird eine Lage- und Verdrehsicherheit des Universalclips 2 gewährleistet. Die Rastverbindung ist wieder lösbar. An den beiden Seiten des Basiskörpers 9 sind die Anschraubflansche 5 zur Befestigung des Universalclips 2 mittels Schrauben oder ähnlichen Befestigungselementen angebracht. Damit ist es möglich, den Universalclip 2 auf unterschiedlichen Trägerelementen 11 zu befestigen.

### BEZUGSZEICHENLISTE

- 01: Anschlußleiste
- 02: Universalclip
- 03: Grundkörper
- 04: Öffnung
- 05: Montagestange
- 06: Trennwand
- 07: Schlitz
- 08: Montageschiene
- 09: Basiskörper
- 10: Rasthaken
- 11: Trägerelement
- 12: Anschraubflansch
- 13: Schrauböffnung
- 14: Außensteg
- 15: Raststeg
- 16: Aufnahmeteil
- 17: DIN-Anschlußleiste
- 18: Rückwand
- 19: Steg
- 20: Rastaufnahme
- 21: Einschubschlitz
- 22: Schnappelement
- 23: Öffnung
- 24: Lasche
- 25: Aufnahmeelement
- 26: Bauelement
- 27: Befestigungselement

## Patentansprüche

1. Universalclip (2) zur Halterung von Anschlußleisten (1) der Telekommunikations-, Steuerungs-, Energie- und Datentechnik aus einem Grundkörper (3) mit Aufnahmeelementen (25) für Bauelemente (26) und mit Befestigungselementen (27) zur Festlegung an einem Trägerelement (11),
**dadurch gekennzeichnet,**
**daß** der Grundkörper (3) eine Öffnung (4) als Aufnahmeelement (25) für Bauelemente (26) in Form von Montagestangen (5) umschließt und die Öffnung (4) von mindestens einem Schlitz (7) durchdrungen ist, der als Aufnahmeelement (25) für Bauelemente (26) in Form von Montageschienen (8) dient.

2. Universalclip nach Anspruch 1, **dadurch gekennzeichnet, daß** der Schlitz (7) die Öffnung (4) seitlich der Achse durchdringt.

3. Universalclip nach Anspruch 1 oder 2, **dadurch gekennzeichnet, daß** je ein Schlitz (7) parallel und im Abstand zueinander beidseits der Achse der Öffnung (4) vorgesehen ist.

4. Universalclip nach einem der Ansprüche 1 bis 3, **dadurch gekennzeichnet, daß** der Grundkörper (3) von Vorder- und Rückseite eingebrachte Öffnungen (4) aufweist, die auf Vorder- und Rückseite von den Schlitzen (7) durchdrungen sind.

5. Universalclip nach einem der Ansprüche 1 bis 4, **dadurch gekennzeichnet, daß** als Befestigungselement (27) zur Halterung an Trägerelementen (11) zwei federnde Rasthaken (10) unterhalb der Unterseite des Basiskörpers (9) angeordnet sind.

6. Universalclip nach einem der Ansprüche 1 bis 5, **dadurch gekennzeichnet, daß** als Befestigungselement (27) zur Halterung an Trägerelementen (11) zwei starre Anschraubflansche (12) an gegenüberliegenden Stirnseiten des Basiskörpers (9) angeordnet sind.

7. Universalclip nach einem der Ansprüche 1 bis 6, **dadurch gekennzeichnet, daß** die Trägerelemente (11) mit parallelen Reihen von geraden und/oder kreuzförmigen Öffnungen (23) zur Aufnahme der Befestigungselemente (27; 10,21) versehen sind.

8. Universalclip nach einem der Ansprüche 1 bis 7, **dadurch gekennzeichnet, daß** radial am Grundkörper (3) ein U-förmiges Aufnahmeteil (16) für DIN-Anschlußleisten (17) angeordnet ist, das auf der Innenseite seiner Rückwand (18) mit einem halbrunden Steg (19) versehen ist.

9. Universalclip nach Anspruch 8, **dadurch gekennzeichnet, daß** auf der Außenseite der Rückwand (18) des Uförmigen Aufnahmeteils (16) und innerhalb des halbrunden Steges (19) ein Einschubschlitz (21) für eine Montageschiene (8) ausgebildet ist.

10. Universalclip nach einem der Ansprüche 1 bis 9, **dadurch gekennzeichnet, daß** der Grundkörper (3) aus Kunststoff ausgebildet ist.

11. Universalclip nach einem der Ansprüche 1 bis 10, **dadurch gekennzeichnet, daß** der Grundkörper (3) mit einer Öffnung (4) zur Aufnahme einer Montagestange (5), mit je einem die Öffnung (4) auf jeder Seite der Achse durchdringenden Schlitz (7) zur Aufnahme einer Montageschiene (8), zwei federnden Rasthaken (10) unterhalb der Unterseite des Basiskörpers (9) und zwei starren Anschraubflanschen (12) auf den Stirnseiten des Basiskörpers (9) zur Befestigung auf einem Träger-element (11) ausgebildet ist.

## Claims

1. Universal clip (2) for mounting terminal strips (1) for telecommunication, control, power and data technology, constructed of a base body (3) comprising receiving elements (25) for components (26) and comprising fastening elements (27) for fixing to a carrier element (11) **characterized in that** the base body (3) encloses an opening (4) as receiving element (25) for components (26) in the form of assembly rods (5) and the opening (4) is penetrated by at least one slot (7) which is used as receiving element (25) for components (26) in the form of assembly rails (8).

2. Universal clip according to Claim 1 **characterized in that** the slot (7) penetrates the opening (4) to the side of the axis.

3. Universal clip according to Claim 1 or 2, **characterized in that** in each case one slot (7) is provided in parallel and at a distance from one another on both sides of the axis of the opening (4).

4. Universal clip according to one of Claims 1 to 3, **characterized in that** the base body (3) has openings (4), inserted from front and rear, which on the front and rear are penetrated by the slots (7).

5. Universal clip according to one of Claims 1 to 4, **characterized in that**, as a fastening element (27) for mounting on carrier elements (11), two resilient locking hooks (10) are arranged below the underside of the base body (9).

6. Universal clip according to one of Claims 1 to 5, **characterized in that**, as a fastening element (27) for mounting on carrier elements (11), two rigid screw-on flanges (12) are arranged on opposite end faces of the base body (9).

7. Universal clip according to one of Claims 1 to 6, **characterized in that** the carrier elements (11) are provided with parallel rows of straight and/or cross-shaped openings (23) for accommodating the fastening elements (27; 10, 21).

8. Universal clip according to one of Claims 1 to 7, **characterized in that** a U-shaped receiving part (16) for DIN terminal strips (17), which is provided with a half-round web (19) on the inside of its rear wall (18), is arranged radially on the base body (3).

9. Universal clip according to Claim 8, **characterized in that** a slide-in slot (21) for an assembly rail (8) is formed on the outside of the rear wall (18) of the U-shaped receiving part (16) and inside the half-round web (19).

10. Universal clip according to one of Claims 1 to 9, **characterized in that** the base body (3) is constructed of plastic.

11. Universal clip according to one of Claims 1 to 10, **characterized in that** the base body (3) is constructed with an opening (4) for accommodating an assembly rod (5), with in each case one slot (7), penetrating the opening (4) on each side of the axis, for accommodating an assembly rail (8), two resilient locking hooks (10) below the underside of the base body (9) and two rigid screw-on flanges (12) on the end faces of the base body (9) for fastening to a carrier element (11).

## Revendications

1. Pince universelle (2) pour maintenir des lattes de raccordement (1) dans les techniques des télécommunications, de la commande, de l'énergie et des données, constituée d'un corps de base (3) doté d'éléments (25) de réception de composants (26) et d'éléments de fixation (27) destinés à la fixation sur un élément de support (11),
**caractérisée en ce que**
le corps de base (3) entoure une ouverture (4) qui sert d'élément de réception (25) de composants (26) qui présentent la forme de tiges de montage (5) et **en ce que** l'ouverture (4) est traversée par au moins une fente (7) qui sert d'élément de réception (25) pour les composants (26) qui présentent la forme de rails de montage (8).

2. Pince universelle selon la revendication 1, **caractérisée en ce que** la fente (7) traverse l'ouverture (4) latéralement par rapport à l'axe.

3. Pince universelle selon les revendications 1 ou 2, **caractérisée en ce que** deux fentes parallèles (7), chacune d'un côté de l'axe d'ouverture (4) et situées à distance l'une de l'autre sont prévues.

4. Pince universelle selon l'une quelconque des revendications 1 à 3, **caractérisée en ce que** le corps de base (3) présente des ouvertures (4) ménagées par le côté avant et par le côté arrière et qui sont traversées par les fentes (7) sur le côté avant et le côté arrière.

5. Pince universelle selon l'une quelconque des revendications 1 à 4, **caractérisée en ce que**, comme élément de fixation (27) et de maintien sur des éléments de support (11), deux crochets d'encliquetage élastique (10) sont disposés en dessous du côté inférieur du corps de base (9).

6. Pince universelle selon l'une quelconque des revendications 1 à 5, **caractérisée en ce que** deux brides rigides de vissage (12) sont disposées sur les côtés frontaux opposés du corps de base (9) comme éléments de fixation (27) destinés au maintien sur des éléments de support (11).

7. Pince universelle selon l'une quelconque des revendications 1 à 6, **caractérisée en ce que** les éléments de support (11) sont dotés de rangées parallèles d'ouvertures (23) rectilignes ou en forme de croix destinées à reprendre les éléments de fixation (27; 10, 21).

8. Pince universelle selon l'une quelconque des revendications 1 à 7, **caractérisée en ce qu'**une pièce de réception (16) en forme de U pour des lattes de raccordement DIN (17) et dotée sur le côté intérieur de sa paroi arrière (18) d'une traverse (19) semi-circulaire est disposée radialement sur le corps de base (3).

9. Pince universelle selon la revendication 8, **caractérisée en ce qu'**une fente d'insertion (21) pour un rail de montage (8) est formée sur le côté extérieur de la paroi arrière (18) de la pièce de réception (16) en forme de U et à l'intérieur de la traverse semi-circulaire (19).

10. Pince universelle selon l'une quelconque des revendications 1 à 9, **caractérisée en ce que** le corps de base (3) est réalisé en matière synthétique.

11. Pince universelle selon l'une quelconque des revendications 1 à 10, **caractérisée en ce que** le corps de base (3) est réalisé avec un ouverture (4) de réception d'une tringle de montage (5), avec sur chaque côté de l'axe, une fente (7) qui traverse l'ouverture (4) et destinée à recevoir un rail de montage (8), deux crochets de pinçage élastiques (10) situés en dessous du côté inférieur du corps de base (9) et deux brides de vissage rigides (12) situées sur les côtés frontaux du corps de base (9) pour sa fixation sur un élément de support (11).
